# EUROPÄISCHE PATENTSCHRIFT

(11) **EP 2 632 779 B1**
(45) Veröffentlichungstag und Bekanntmachung des Hinweises auf die Patenterteilung: **05.07.2017**
(21) Anmeldenummer: 11794018.9
(22) Anmeldetag: 27.10.2011
(51) Int. Cl.: B60T 7/02, B60T 7/04, B60T 7/06, B60T 11/18, B60T 17/22, G05G 1/30, G05G 1/32, G05G 1/36, G05G 1/46

(54) **BETÄTIGUNGSVORRICHTUNG MIT EINEM PEDAL UND EINER AN DIESEM GELENKIG ANGEORDNETEN DRUCKSTANGE**
ACTUATING DEVICE COMPRISING A PEDAL AND A PUSH ROD ARTICULATED THEREON
DISPOSITIF D'ACTIONNEMENT COMPRENANT UNE PÉDALE ET UNE TIGE DE PRESSION ARTICULÉE SUR LA PÉDALE

(30) Priorität: 28.10.2010 DE 102010049866
(43) Veröffentlichungstag der Anmeldung: 04.09.2013
(73) Patentinhaber: Volkswagen Aktiengesellschaft, 38440 Wolfsburg (DE)
(72) Erfinder: BERENDSEN, Swantje, 38106 Braunschweig (DE); JELBKE, Christian, 38440 Wolfsburg (DE); LIEBICH, Martin, 38319 Remlingen (DE); SCHNEIDER, Christian, 38126 Braunschweig (DE)
(86) Internationale Anmeldenummer: PCT/EP2011/005412
(87) Internationale Veröffentlichungsnummer: WO 2012/055556

(56) Entgegenhaltungen:
- EP-A1- 1 440 858
- EP-A1- 1 559 933
- EP-A2- 0 229 350
- WO-A1-01/53135
- WO-A1-2005/002937
- DE-A1-102010 002 848
- FR-A1- 2 791 100
- FR-A1- 2 842 318
- FR-A1- 2 887 836
- FR-A1- 2 889 567

## Beschreibung

Die Erfindung betrifft eine Betätigungsvorrichtung mit einem Pedalhebel und einer an diesem gelenkig angeordneten Druckstange gemäß dem Oberbegriff des Anspruchs 1.

Die Herstellung einer gelenkigen Verbindung einer Druckstange eines Hauptbremszylinders oder Bremskraftverstärkers eines Kraftfahrzeugs mit dem im Fahrgastraum befindlichen Bremspedal kann mit Hilfe eines Lagerbolzens vorgenommen werden, der durch entsprechende Ausnehmungen einer Gelenkgabel sowie eines Steges an der Druckstange bzw. am Bremspedal durchgreift und mittels eines Sicherungsringes o. ä. gesichert ist. Dabei ist zu berücksichtigen, dass die Herstellung der Verbindung an einer vergleichsweise schwer zugänglichen Stelle erfolgt und zudem nur manuell durchführbar ist.

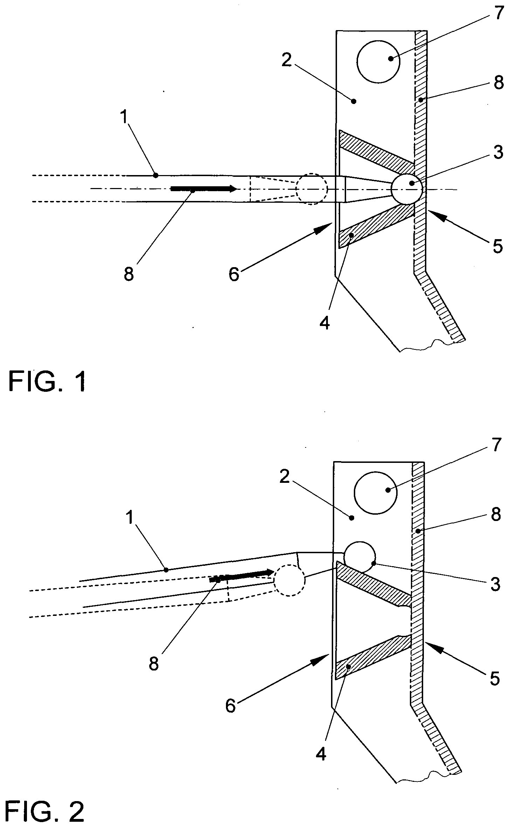

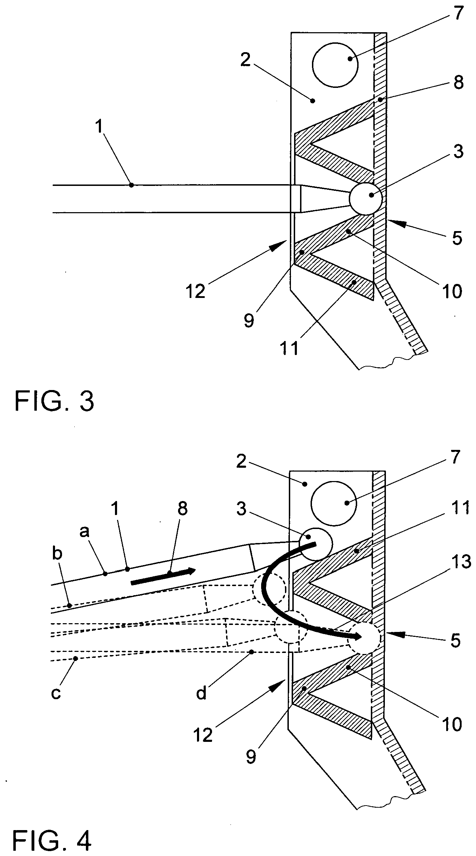

Demgegenüber wird die Gelenkverbindung zwischen Druckstange und Pedal bei der aus der EP-A-0 148 670 bekannten Betätigungsvorrichtung durch eine einfache Schnappverbindung hergestellt, bei welcher ein kugelkopfförmig ausgebildetes Lagerteil des freien Endes der Druckstange durch eine Federklammer hindurch in ein im Pedalsteg eingeformtes, als kalottenförmige Lagerpfanne ausgebildetes Aufnahmeteil hineingedrückt ist. Bei dieser Ausbildung erscheint grundsätzlich auch eine vollautomatische Endmontage der Betätigungsvorrichtung möglich. Obgleich konstruktive Einzelheiten dieser bekannten Pedal- und Lagerpfannenausbildung textlich nicht näher erläutert sind, besteht das Pedal bzw. der Pedalsteg ausweislich der Schnittdarstellungen der Figuren 2 und 4 aus zwei flächig aneinander liegenden und durch Klebung oder Schweißung miteinander verbundenen Blechteilen, deren Teilfuge im Bereich der Gelenkverbindung zur Aufnahme des kugelkopfförmigen Druckstangenendes kalottenförmig aufgeweitet

Die FR 2 889 567 A1 hat eine Betätigungsvorrichtung zum Inhalt, bei der ein Pedal automatisch mit einer Druckstange verbunden werden kann. Dabei wird die Druckstange im Aufnahmeteil eines beweglichen Elements gelagert und durch die Drehung des Elements verrastet. In der DE 10 2010 002 848 A1 ist ebenfalls eine Betätigungsvorrichtung gezeigt, bei der ein Pedal mit einer Druckstange verbunden ist. Die Druckstange wird bei der Montage durch einen trichterförmigen Vorsprung in eine zylinderförmige Aufnahme einer hydraulischen Einheit geführt und dort gelagert.

Aus der EP 0 229 350 A2 ist eine gattungsgemäße Betätigungsvorrichtung mit einem Pedal und einer an diesem gelenkig angelenkten einteiligen Druckstange zur Übertragung der Betätigungskräfte bekannt, bei dem das am pedalseitigen Ende der Druckstange angeordnete Lagerteil als Lagerkugel ausgebildet ist und dass das am Bremspedal befestigte Aufnahmeteil entsprechend dieser Kugelform als etwa rotationssymmetrisches trichterförmiges Blechteil ausgebildet ist, dessen Spitzenbereich zu einer etwa kugeligen Lagerpfanne für die Lagerkugel ausgeformt ist. Im trichterförmigen Blechteil ist dabei wiederum eingangs der Lagerpfanne eine Federklammer o. ä. angeordnet, die beim Einführen der Lagerkugel in die Lagerpfanne überdrückt wird und durch welche die Lagerkugel in der Lagerpfanne weitgehend spielfrei gehalten und auch gesichert wird.

Nachteilig an dieser Ausführung ist die trichterförmige rückwärtige Kontur des Aufnahmeteils. Trifft die Druckstange während der Montage den Einführtrichter nicht, so kann es zu einem Verhaken der Druckstange in der fehlverbauten Position kommen und selbst bei einem Ziehen am Pedalhebel kann der Eindruck entstehen, dass die Druckstange korrekt montiert sei. Ein Betätigen eines Pedals mit einer derart fehlverbauten Druckstange führt zur Beschädigung des dahintergeschalteten Brems- oder Kuppungsgerätes mit der Folge hoher Reparaturkosten oder Sicherheitseinschränkungen.

Der Erfindung liegt daher die Aufgabe zugrunde eine Betätigungsvorrichtung mit einem Pedalhebel und einer an dieser gelenkig anliegenden Druckstange zu schaffen, bei der ein Verhaken der Druckstange in einer fehlverbauten Position möglichst verhindert wird.

Diese Aufgabe wird durch eine Betätigungsvorrichtung mit einem Pedalhebel und einer an dieser gelenkig anliegenden Druckstange mit den Merkmalen des Anspruchs 1 gelöst. Bevorzugte Ausführungsformen der Erfindung sind Gegenstand der Unteransprüche.

Die erfindungsgemäße Betätigungsvorrichtung mit einem Pedal und einer an diesem gelenkig angeordneten Druckstange zur Übertragung von einer auf das Pedal ausgeübten Kraft, wobei die Druckstange in einem am Pedal befestigten Aufnahmeteil gelagert ist, weist ein Aufnahmeteil mit einem inneren und einem äußeren Kegelstumpf auf, die so miteinander verbunden sind, dass die in Richtung der Druckstange gerichtete große Grundfläche des inneren Kegelstumpfes die kleine Grundfläche des äußeren Kegelstumpfes bildet und das Aufnahmeteil aus den miteinander verbundenen Mantelflächen der Kegelstümpfe gebildet wird.

Der innere Kegelstumpf des Aufnahmeteils dient dabei zur Aufnahme der Druckstange, die in dem Aufnahmeteil gelenkig angeordnet ist, wobei unter Kegelstumpf hier nicht notwendigerweise ein auf einer kreisförmigen Grundfläche basierender Kegelstumpf verstanden wird, d.h. der zugehörige Kegel kann auch auf einer annähernd kreisförmigen, beispielsweise elliptischen Grundfläche basieren. Falls es baulich bedingt notwendig ist, umfasst der Begriff Kegelstumpf auch auf n-eckigen Grundflächen basierende Kegelstümpfe mit n größer oder gleich 4. Durch die Anordnung der großen Grundfläche des inneren Kegelstumpfes in Richtung der Druckstange wirkt der innere Kegelstumpf als trichterförmige Aufnahme für die Druckstange. Die Anordnung der beiden Kegelstümpfe zueinander ist dadurch definiert, dass die große Grundfläche des inneren Kegelstumpfes gleich ist der kleinen Grundfläche des äußeren Kegelstumpfes, wodurch der Mantel des äußeren Kegelstumpfes als Abgleitschräge wirkt. Daher hat das Aufnahmeteil im Querschnitt im Wesentlichen eine M-Form und das Aufnahmeteil wird durch die miteinander verbundenen Mantelflächen der beiden Kegelstümpfe gebildet.

Die äußere Mantelfläche des äußeren Kegelstumpfes bewirken eine Abgleitschräge des Aufnahmeteils, die um den Aufnahmetrichter herum angeordnet ist, so dass die Druckstange bei fehlerhaftem Einführen zur Anordnung an das Aufnahmeteil nicht mehr mit dem Aufnahmeteil verhaken kann, wobei unter fehlerhaftem Einführen eine Einführrichtung der Druckstange zu verstehen ist, bei der der innere Kegelstumpf, d.h. der Aufnahmetrichter, des Aufnahmeteils, nicht getroffen wird.

Vorzugsweise werden die Kegelstümpfe durch gerade Kegelstümpfe gebildet, wobei gerade Kegelstümpfe solche sind, die auf einem Kegel mit kreisförmiger Grundfläche basieren. Damit erreicht man ein rotationssymmetrisches Aufnahmeteil, welches besonders einfach herzustellen ist.

Weiter bevorzugt weist die Druckstange ein an ihrem pedalseitigen Ende angeordnetes Lagerteil auf, welches in eine entsprechende Lagerpfanne des inneren Kegelstumpfs des Aufnahmeteils eingreift.

Insbesondere kann das Lagerteil der Druckstange durch eine Lagerkugel gebildet sein. Dies bewirkt mit einer entsprechend ausgebildeten aufnahmeteilseitigen Lagerpfanne eine gelenkige Anordnung mit ausreichender Bewegungsfreiheit in allen Raumrichtungen.

Um die Druckstange fest aber lösbar mit dem Pedal zu verbinden, wird das Lagerteil, also vorzugsweise die Lagerkugel, durch eine geeignete Verrieglungseinrichtung in der Lagerpfanne des Aufnahmeteils gehalten. Eine derartige Verriegelungseinrichtung kann beispielsweise durch eine Federklammer gebildet werden, die beim Einführen der Lagerkugel in den Aufnahmetrichter des Aufnahmeteils, d.h. in den inneren Kegelstumpf, überdrückt wird, so dass die Lagerkugel in der Lagerpfanne weitgehend spielfrei gehalten und gesichert wird.

Das Aufnahmeteil kann vorzugsweise ein Blechteil sein, welches in üblicher Weise durch eine Presse aus einer Blechplatte gefertigt werden kann.

Eine bevorzugte Ausführungsform der Erfindung wird nachfolgend anhand der Zeichnungen erläutert. Dabei zeigt
- Fig. 1: eine korrekte Montage einer Druckstange nach dem Stand der Technik,
- Fig. 2: eine Fehlmontage einer Druckstange nach dem Stand der Technik,
- Fig. 3: eine erfindungsgemäße Betätigungsvorrichtung mit einem Aufnahmeteil mit Abgleitschräge und
- Fig. 4: die Behebung einer Fehlmontage mittels der Betätigungsvorrichtung.

Fig. 1 zeigt einen Querschnitt durch eine Betätigungsvorrichtung gemäß dem Stand der Technik mit einer korrekten Montage einer in einem Pedal 2 gelenkig angeordneten Druckstange 1, wobei als Pedal 2 beispielsweise ein Brems- oder Kupplungspedal in Frage kommt, und die Druckstange 1 die vom Fahrer auf das Pedal 2 ausgeübte Kraft auf eine entsprechende Brems- oder Kupplungseinrichtung (nicht dargestellt) überträgt. Die Druckstange 1 weist ein an ihrem pedalseitigen Ende in Form einer Lagerkugel 3 ausgebildetes Lagerteil auf, das im eingekoppelten Zustand in einer nicht näher dargestellten Lagerung 5 im Spitzenbereich eines im wesentlichen rotationssymmetrisch ausgebildeten Aufnahmetrichters 4 angeordnet ist. Im in Fig. 1 dargestellten Querschnitt ist der Aufnahmetrichter 4 daher V-förmig, dessen Öffnungsbereich 6 zur Druckstange 1 zeigt.

Zur Halterung der Lagerkugel 3 im Aufnahmetrichter 4 ist üblicherweise der Spitzenbereich des Aufnahmetrichters 4 als Lagerung 5 in Form einer Lagerpfanne für die Lagerkugel 3 ausgebildet, wobei üblicherweise eingangs der Lagerpfanne eine Federklammer (nicht dargestellt) angeordnet ist, die beim Einführen der Lagerkugel 3 in die Lagerpfanne überdrückt wird, so dass die Lagerkugel 3 in der Lagerpfanne 5 gehalten und gesichert wird. Durch eine Betätigung des Pedals 2 wird dieses um die Pedalachse 7 verschwenkt und es wird so ein Druck auf die Druckstange 1 ausgeübt. Ferner ist in Fig. 1 noch der Schnitt durch das vordere Pedalblech 8 dargestellt.

Gestrichelt dargestellt ist die Druckstange 1 mit der Lagerkugel 3 vor der korrekten Einführung in den Aufnahmetrichter 4 entlang der Einführrichtung 8. Wird die Druckstange von der gestrichelt dargestellten Position in die mit ausgezogenen Linien dargestellte Position überführt, so rastete die Lagerkugel 3 in die as Lagerung 5 des Aufnahmetrichters 4 ein und Druckstange 1 und Pedal 2 sind in korrekter Weise miteinander verbunden. Bedingt durch den sich öffnenden V-förmige Aufnahmetrichter 4 kann die Einführrichtung 6 von der optimalen Richtung um einen durch den Öffnungsbereich 6 des Aufnahmetrichters 4 vorgegebenen Betrag abweichen, um dennoch ein sicheres Koppeln der Druckstange 1 mit dem Pedal 2 zu bewirken.

Fig. 2 zeigt den Fall, in welchem die Einführrichtung 8 außerhalb des zulässigen Öffnungsbereichs 6 des Aufnahmetrichters 4 liegt. Dies führt dazu, dass beim Zusammenführen von Druckstange 1 und Pedal 2 entlang der eingezeichneten Richtung 8 der Lagerkopf 3 den Aufnahmetrichter 4 nicht innerhalb des Öffnungsbereichs 8 trifft, sondern an der Kante des Aufnahmetrichters 4 quasi nach oben abrutscht, was durch die gestrichelte und durchzogene Darstellungen der Druckstange 1 dargestellt ist. Dies führt in der mit durchgezogenen Linien dargestellten Endposition zu einem Verkanten des Lagerkopfes 3 der Druckstange 1 mit der Außenseite des Aufnahmetrichters 4. Da diese verkantete Verbindung stabil ist, kann eine Betätigung des Pedals 2 aufgrund der falschen Druckrichtung zu einer Beschädigung der hinter der Druckstange 1 angeordneten Einheiten (nicht dargestellt) führen. Ferner muss ein einfaches Anheben des Pedals 2 auch nicht einem Lösen der falschen Verbindung führen.

Fig. 3 zeigt die erfindungsgemäße Betätigungsvorrichtung, mit der ein Verhaken der Druckstange 1 vermieden wird. Die Druckstange 1 wird gelenkig mit einem in dem Pedal 2 angeordneten Aufnahmeteil 9 verbunden. Dabei umfasst das Aufnahmeteil 9 einen inneren Kegelstumpf 10 und einen äußeren Kegelstumpf 11, deren Mäntel an der großen Grundfläche 12 des inneren Kegelstumpfes 10 miteinander verbunden sind. Mit anderen Worten die große Grundfläche des inneren Kegelstumpfes 10 und die kleine Grundfläche des äußeren Kegelstumpfes 11 sind identisch. Dabei wirkt bzw. entspricht der innere Kegelstumpf 10 dem Aufnahmetrichter 4 der Vorrichtung gemäß Fig. 1 und der äußere Kegelstumpf 11 wirkt wie eine Abgleitschräge, wie in der nächsten Figur erläutert wird. Die Lagerkugel 3 der Druckstange 1 wird in üblicher Weise wie bei der bekannten Vorrichtung in einer Lagerung 5 gehaltert.

Fig. 4 zeigt die Behebung einer Fehlmontage einer Druckstange 1 in einem Pedal 2, welches ein Aufnahmeteil 9 gemäß der Erfindung aufweist. Wird die Druckstange 1 entlang einer Richtung 8 zur Verbindung mit dem Pedal 2 eingeführt, die den Öffnungsbereich 12 des Aufnahmeteils 9 nicht trifft, so kann sich die Lagerkugel 3 der Druckstange 1 aufgrund des als Abgleitschräge wirkenden äußeren Kegelstumpfs 11 nicht mit dem Aufnahmeteil 9 verhaken, was durch die Situation a dargestellt ist. Um ein korrektes Einrasten der Druckstange 1 in das Aufnahmeteil 9 zu bewirken, kann das Pedal 2 angehoben und/oder die Druckstange 1 zurückgezogen werden, so dass sich die Druckstange 1 entlang des Weges 13 bewegt und schließlich in die Lagerung 5 des inneren Kegelstumpfes 10 einrastet, wodurch die korrekte gelenkige Verbindung zwischen der Druckstange 1 und dem Pedal 2 hergestellt ist. Dies wird durch die Situationen b, c und d dargestellt, die den zeitlichen Ablauf der Korrektur ausgehend von der Situation a zeigen.

### Bezugszeichenliste

- 1: Druckstange
- 2: Pedal
- 3: Lagerkugel
- 4: Aufnahmetrichter
- 5: Lagerung
- 6: Öffnungsbereich der Aufnahme
- 7: Pedalachse
- 8: Einführrichtung
- 9: Aufnahmeteil
- 10: Mantel des innerer Kegelstumpfs
- 11: Mantel des äußerer Kegelstumpfs
- 12: Öffnungsbereich des inneren Kegelstumpfs
- 13: Einrastweg

- a: erste Druckstangensituation
- b: zweite Druckstangensituation
- c: dritte Druckstangensituation
- d: vierte Druckstangensituation

## Patentansprüche

1. Betätigungsvorrichtung mit einem Pedal (2) und einer an diesem gelenkig angeordneten Druckstange (1) zur Übertragung von einer auf das Pedal (2) ausgeübten Kraft, wobei die Druckstange (1) in einem am Pedal befestigten Aufnahmeteil (9) gelagert ist, **dadurch gekennzeichnet, dass** das Aufnahmeteil (9) einen inneren (10) und einen äußeren Kegelstumpf (11) aufweist, die so miteinander verbunden sind, dass die in Richtung der Druckstange (1) gerichtete große Grundfläche (12) des inneren Kegelstumpfes (10) die kleine Grundfläche des äußeren Kegelstumpfes (11) bildet, wobei das Aufnahmeteil (9) aus den miteinander verbundenen Mantelflächen der Kegelstümpfe (10, 11) gebildet wird.

2. Betätigungsvorrichtung nach Anspruch 1, **dadurch gekennzeichnet, dass** die Kegelstümpfe (10, 11) durch gerade Kegelstümpfe gebildet werden.

3. Betätigungsvorrichtung nach einem der vorangegangenen Ansprüche, **dadurch gekennzeichnet, dass** die Druckstange (1) ein am pedalseitigen Ende angeordnetes Lagerteil (3) aufweist, welches in eine entsprechende Lagerpfanne (5) des inneren Kegelstumpfs (10) des Aufnahmeteils (9) eingreift.

4. Betätigungsvorrichtung nach Anspruch 3, **dadurch gekennzeichnet, dass** das Lagerteil (3) der Druckstange (1) durch eine Lagerkugel gebildet wird.

5. Betätigungsvorrichtung nach einem der Ansprüche 3 oder 4, **dadurch gekennzeichnet, dass** das Lagerteil (3) in der Lagerpfanne (5) durch eine Verrieglungseinrichtung gehalten wird.

## Claims

1. Actuating apparatus having a pedal (2) and a push rod (1) which is arranged on it in an articulated manner for transmitting a force which is exerted on the pedal (2), the push rod (1) being mounted in a receiving part (9) which is fastened to the pedal, **characterized in that** the receiving part (9) has an inner (10) and an outer truncated cone (11) which are connected to one another in such a way that the large base area (12) of the inner truncated cone (10) which is directed in the direction of the push rod (1) forms the small base area of the outer truncated cone (11), the receiving part (9) being formed from the envelope faces of the truncated cones (10, 11), which envelope faces are connected to one another.

2. Actuating apparatus according to Claim 1, **characterized in that** the truncated cones (10, 11) are formed by straight truncated cones.

3. Actuating apparatus according to either of the preceding claims, **characterized in that** the push rod (1) has a bearing part (3) which is arranged at the pedal-side end and engages into a corresponding bearing socket (5) of the inner truncated cone (10) of the receiving part (9).

4. Actuating apparatus according to Claim 3, **characterized in that** the bearing part (3) of the push rod (1) is formed by a bearing ball.

5. Actuating apparatus according to either of Claims 3 and 4, **characterized in that** the bearing part (3) is held in the bearing socket (5) by way of a locking device.

## Revendications

1. Dispositif d'actionnement comprenant une pédale (2) et une tige de pression (1) articulée sur celle-ci pour la transmission d'une force exercée sur la pédale (2), dans lequel la tige de pression (1) est montée dans une pièce de réception (9) fixée à la pédale, **caractérisé en ce que** la pièce de réception (9) présente un tronc de cône intérieur (10) et un tronc de cône extérieur (11), qui sont assemblés l'un à l'autre de telle manière que la grande face de base (12) du tronc de cône intérieur (10) orientée en direction de la tige de pression (1) forme la petite face de base du tronc de cône extérieur (11), dans lequel la pièce de réception (9) est formée par les faces latérales assemblées l'une à l'autre des troncs de cône (10, 11).

2. Dispositif d'actionnement selon la revendication 1, **caractérisé en ce que** les troncs de cône (10, 11) sont formés par des troncs de cône droits.

3. Dispositif d'actionnement selon l'une quelconque des revendications précédentes, **caractérisé en ce que** la tige de pression (1) présente une pièce d'appui (3) disposée à l'extrémité côté pédale, qui s'engage dans une coupelle d'appui correspondante (5) du tronc de cône intérieur (10) de la pièce de réception (9).

4. Dispositif d'actionnement selon la revendication 3, **caractérisé en ce que** la pièce d'appui (3) de la tige de pression (1) est formée par une bille d'appui.

5. Dispositif d'actionnement selon une des revendications 3 ou 4, **caractérisé en ce que** la pièce d'appui (3) est maintenue dans la coupelle d'appui (5) par un dispositif de verrouillage.
